Europäisches Patentamt

European Patent Office

Office européen des brevets

(19)

(11) Publication number: **0 221 749 B1**

# EUROPEAN PATENT SPECIFICATION

(12)

(45) Date of publication of patent specification: **24.04.91** (51) Int. Cl.⁵: **G11B 33/04**, G11B 23/02

(21) Application number: **86308354.9**

(22) Date of filing: **27.10.86**

(54) **Recording medium storage case.**

(30) Priority: **01.11.85 JP 168701/85**
**06.11.85 JP 170585/85**

(43) Date of publication of application:
**13.05.87 Bulletin 87/20**

(45) Publication of the grant of the patent:
**24.04.91 Bulletin 91/17**

(84) Designated Contracting States:
**AT CH DE FR GB IT LI NL SE**

(56) References cited:
**EP-A- 0 044 242      EP-A- 0 114 631**
**EP-A- 0 130 266      EP-A- 0 187 279**
**DE-A- 3 414 903      GB-A- 2 154 550**

(73) Proprietor: **SONY CORPORATION**
**7-35 Kitashinagawa 6-Chome Shinagawa-ku**
**Tokyo 141(JP)**

(72) Inventor: **Takahashi, Kenji Patents Division**
**Sony Corporation**
**6-7-35 Kitashinagawa**
**Shinagawa-ku Tokyo 141(JP)**

(74) Representative: **Purvis, William Michael**
**Cameron et al**
**D. Young & Co. 10 Staple Inn**
**London WC1V 7RD(GB)**

Rank Xerox (UK) Business Services

## Description

The invention relates to a recording medium storage case.

Such a case may be used for storing recording media per se such as optical discs or optical magnetic discs or recording media such as disc cartridges and tape cassettes.

A conventional case for storage of magnetic recording tape cassettes comprises a pair of case members pivotably connected together and with a pocket portion to receive a magnetic tape cassette formed on one of the case members. To remove a magnetic tape cassette from such a case, the two case members are held and turned by both hands to move them apart, the case is thereafter supported in one hand, and the magnetic tape cassette is taken out from the pocket portion with the other hand.

However, in a conventional case as described above, if a large and heavy recording medium such as an optical disc and disc cartridge having a diameter of 30 cm is kept therein, it is difficult to take out the recording medium using only one hand while holding the case in the other.

Thus it may be necessary for the case to be laid opened on a table or other support surface before the recording medium can be pulled out of the pocket portion. There is then however no clearance between the lower surface of the recording medium and the lower member. Accordingly, the conventional case has the disadvantages that the recording medium cannot be taken out while holding both the upper and lower case members thereof, and in addition, for a large recording medium, both the sides thereof cannot be held by one hand, as a result of which both hands have to be used, thus making it difficult to remove the recording medium.

Patent specification EP-A-130266 discloses a box like container for floppy discs with a lid pivoted at a position a distance set in from the rear edge of the lid. An intermediate member is pivoted to the lid at a rear edge thereof and has trunnions engaged in guides in the side walls of the containers, the guides being so shaped so that the intermediate member is parallel to the lid in the closed position of the lid, is initially maintained parallel as the lid is opened but is moved to an orientation in which it diverges from the lid as the lid approaches a fully open position.

According to the invention there is provided a recording medium storage case comprising:
a first case member and a second case member pivoted together and relatively rotatable about a pivot located in the vicinity of one end of the case; and
a recording medium holding member rotatably supported at the pivot, housed between the first case member and the second case member when the case is closed and so arranged that rotation of the first case member to open the case causes the recording medium holding member also to be rotated through a predetermined angle relative to the second case member;
characterised in that a first engaging portion formed as a lateral projection and spaced from the pivot is provided on the first case member;
a first engaged portion is provided on the recording medium holding member and is formed as a wall at the end of an arcuate slot in the recording medium holding member;
the first engaging portion engages with the first engaged portion upon rotation of the first case member through a predetermined angle relative to the second case member from a closed position of the case;
after engagement of the first engaging portion with the first engaged portion, continued rotation of the first case member causes the recording medium holding member also to be rotated;
a slider supported within the recording medium holding member is slidably movable relative to the holding member and cooperates with the projection such that, upon the first case member being rotated away from the second case member to rotate the projection about the pivot, the slider is moved by the projection toward the other end of the second case member, and a recording medium held on the holding member is ejected toward said other end of the second case member by the movement of the slider; and
an opening and closing handle is rotably supported at opposite sides of the other end of the first case member and has a first engaging portion to be engaged with a second engaged portion provided at the other end of the second case member selectively to lock the first and second case members together in a closed position of the case.

A recording medium can easily be removed from the holding member of such a case since both surfaces of the recording medium be engaged by one hand and particularly, a large and heavy recording medium can be easily taken out by one hand.

Advantageously the slider is provided with a pair of hook portions, by which a recording medium can be held thereon.

Thus even if vibrations or shocks are applied when the case is opened, the recording medium is prevented from slipping out of the recording medium holding member.

Preferably the case includes a lock means to lock the first engaging portion at a position wherein the first case member has been rotated beyond said predetermined angle.

Locking and unlocking and opening and closing of the case may be carried out by an extremely simple operation.

The invention is diagrammatically illustrated by way of example with reference to the accompanying drawings, in which:-

Figure 1 is a perspective view of a recording medium storage case according to the invention in the form of a disc cartridge storage case shown in its closed position;

Figure 2 is a perspective view showing the fully open position of the case of Figure 1;

Figure 3 is an exploded perspective view of the case of Figure 1;

Figures 4A and 4C are sequential side views showing opening operation of the case of Figure 1;

Figure 5 is a sectional view corresponding to Figure 4B, showing connections between case members, a cartridge holding member and a slider;

Figures 6A and 6B are enlarged views of a portion of the case of Figure 1 provided with a date card engaging projection;

Figures 7A and 7B are perspective views of a portion of the case of Figure 1 showing a case opening and closing handle; and

Figures 8A and 8D are sequential side views showing the opening and closing operation of the case of Figure 1.

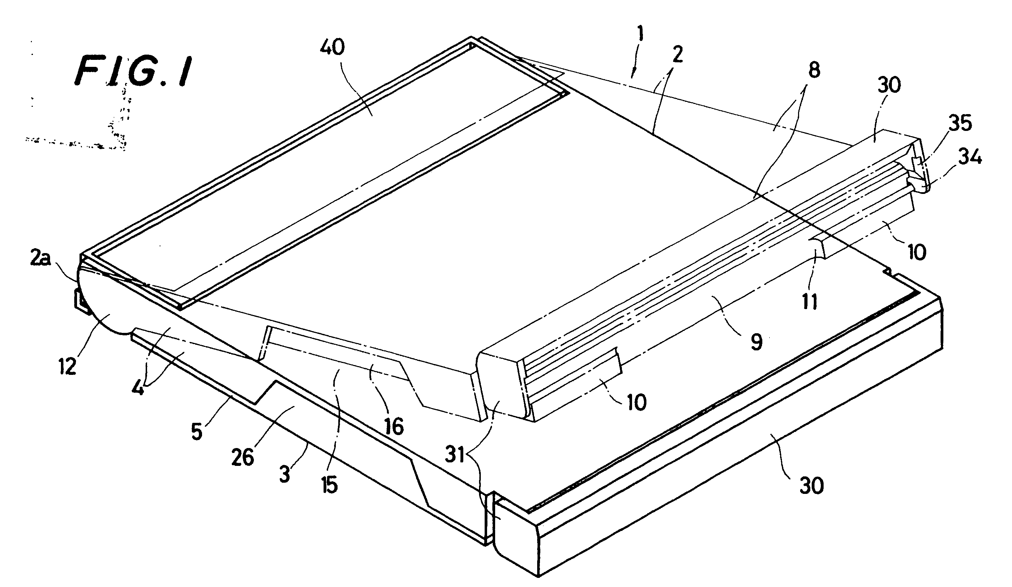

Referring to the drawings and firstly to Figures 1 to 3, a disc cartridge keeping case 1 has an upper case member 2 and a lower case member 3 moulded of synthetic resin.

An upper surface 8 of the upper case member has a generally rectangular shape. A front surface 9 of the upper case member 2 is provided at its opposite sides with raised portions 10 to form a recess 11 therebetween. The recess 11 is formed to provide a clearance between an opening and closing handle 30 and the front surface 9 of the upper case member 2 so that when the case 1 is to be opened, a finger can be engaged in the clearance to facilitate rotation of the handle 30.

Rear ends 12 of side walls 4 of the upper case member 2 each have a curved underside and a laterally inwardly directed pair of pins 6 is provided adjacent free ends 2a thereof. Each pin 6 is inserted through a respective hole 7 of the lower case member 3 into a bore 47 in an annular projection 43 on a side face 42 of a cartridge holding member 40, whereby the upper case member 2 and the lower case member 3 are connected so that they maybe pivotally moved with respect to each other about the pair of pins 6.

At positions spaced from the pins 6 and closer to the free ends 2a of the side walls 4 of the upper case member 2 projects a pair of projections 13 comprising first engaging portions slidably to move a slider 70 disposed within the cartridge holding member 40 and to rotate the member 40. At the forward end of each side wall 4 of the upper case member 2 is a respective pin receiving hole 14 rotatably to support the opening and closing handle 30.

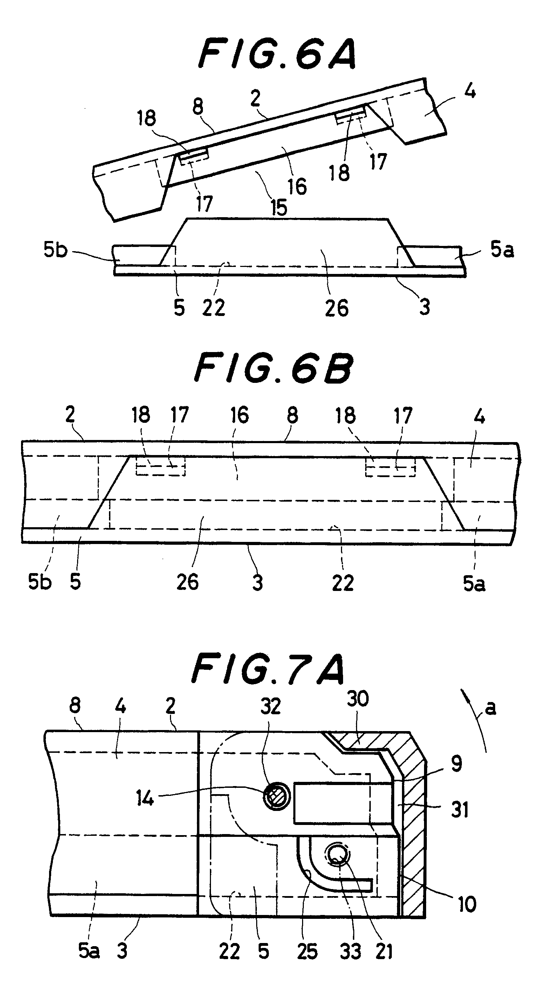

A trapezoidal notch 15 is formed in the middle of each side wall 4 of the case member 2, and an engaging member 16 to retain a data card is formed adjacent to the notch 15 as shown in Figure 6A. The card engaging member 16 projects a smaller extent than the side wall 4, and a card engaging projection 17 projects internally of the member 16. In the vicinity of the projection 17 a hole 18 is provided to assist moulding.

The free ends 2a of the side walls 4 of the upper case member 2 define a square U-shape, and the cartridge holding member 40 is positioned in a space 19 between the arms thereof. During an assembling operation in which the upper case member 2 is mounted on the lower case member 3, when the pins 6 of the upper case member 2 are inserted into the holes 7 of the lower case member 3, the arms forming the ends of the sides 4 on which the pins 6 are provided have to be flexed.

An angle edge 20 is provided at the portion of the upper case member 2 which might abut the cartridge holding member 40.

The opening and closing handle 30 has two parallel projecting arms 31 and two laterally inwardly projecting pins 32 provided on the arms 31 are fitted into the pin receiving holes 14 in the side walls 4 whereby the handle 30 is rotatably mounted at the front end of the upper case member 2.

Two recesses 33 comprise second engaging portions and can engage projections 21 provided as second engaged portions and formed on side walls 5 of the lower case member 3 adjacent the pins 32. Internally of the arms 31 are formed cutaways 34 having approximately the same depth as the height of the projections 21, and inclined surfaces 35 are formed on the peripheral edge of the cutaways 34 to guide the projections 21 toward the recesses 33.

The lower case member 3 has a bottom surface 22 generally in the shape of a rectangle, which is formed with a recess 23 in the middle of the edge at the opposite end to the hinge 6, 7. The recess 23 corresponds to the recess 11 of the upper case member 2 and is formed with an angled edge 24.

An arcuate slot 25 is formed extending about each projection 21 so that the portion of the side wall 5 on which the projection 21 is provided may be easily flexed and the projection 21 may easily be brought into engagement with the respective recess 33 of the handle 30.

A trapezoidal side wall 26 corresponding to the notch 15 of the upper case member 2 is formed in the middle of each side wall 5 of the lower case member 3. Sides 5a and 5b on both wings of each side wall are provided inwardly of the trapezoidal side wall 26 so that when the case members 2 and 3 are closed together, they rest in the side wall 4 of the case member 2, the side wall 4 and the trapezoidal side wall 26 lying in the same plane.

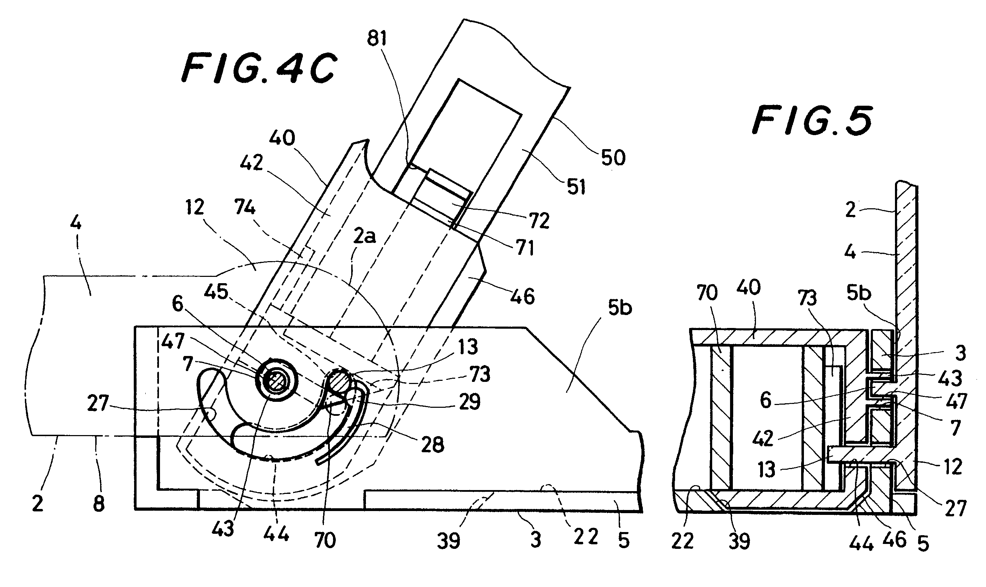

Adjacent each hole 7 of the lower case member 3 is formed a guide slot 27 in the form of a semi-circular arc for guiding the projection 13 of the upper case member 2. In the vicinity of one end of each guide slot 27 is provided a resilient projection 28 formed at its free end with a protrusion 29 as shown in Figure 4C.

When the cartridge holding member 40 has been rotated to a fully raised position upon rotation of the upper case member 2, the resilient projection 28 causes the member 40 to be locked at that position and to lock a disc cartridge 50 in a state where it is levitated between the upper case member 2 and the lower case member 3. That is, the projection 13 of the upper case member 2 is supported at the predetermined position by the protrusion 29 of the resilient projection 28. Thereby, the upper case member 2 is retained at the predetermined position, as a consequence of which the cartridge holding member 40 is also locked at a predetermined angle.

On one end of the bottom 22 of the case member 3 is provided a pair of left and right openings 38 to which a portion of the member 40 is fitted, and an inclined edge surface 39 is formed in the peripheral edge thereof.

The cartridge holding member 40 has a section in the form of a square U-shape, and an inclined surface 46 is formed at the peripheral edge on the lower case member 3 side thereof. A slot 44 extending in an arc is provided about the periphery of each angular projection 43 of the member 40. A shown in Figures 4C and 5, the projections 13 of the upper case member 2 are engaged in the slots 44 through the guide slots 27 of the lower case member 3, and the projections 13 are slidably movable within the guide slots 27 and the slots 44. An end 45 of each slot 44 is engaged by the respective projection 13 as the case is opened thereby to cause rotation of the member 40.

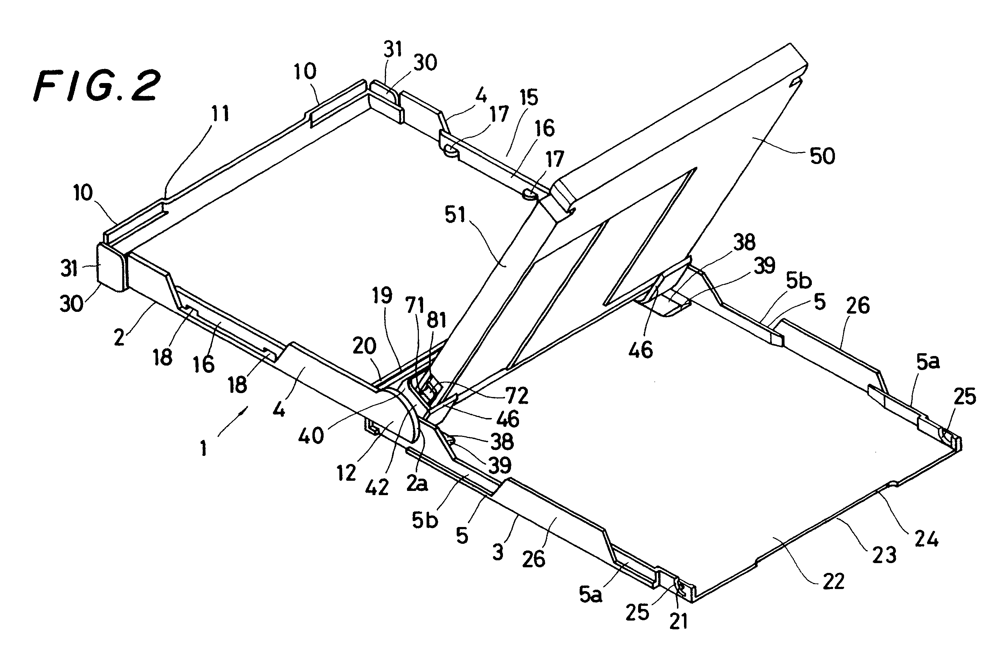

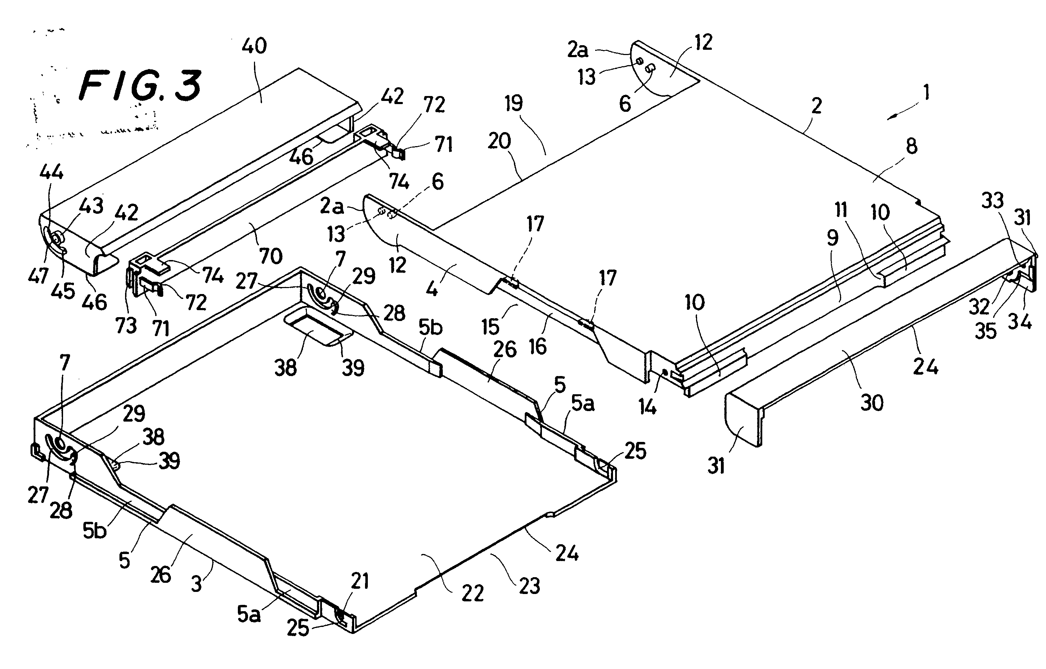

The slot 44 is so formed that when the upper case member 2 has rotated through 120°, the projections 13 abut against the ends 45. Therefore, as shown in Figure 2, when the upper case member 2 has been opened through 180°, the member 40 has been rotated through an angle of 60°. The slider 70 is slidably mounted within the member 40 to hold the disc cartridge 50 to be slid within the member 40. The slider 70 is formed at each side with a groove 73, and each projection 13 of the upper case member 2 engages in a respective one of the grooves 73, as shown in Figures 3, 4A to 4C and 5. The slider 70 is integrally formed with a projection 74 which slidably contacts an upper surface of the member 40 slidably to move the slider 70 in a stabilized posture. The slider 70 is also provided with a pair of cartridge engaging portions 71, each portion 71 being formed as a resilient member, at the end of which is formed a hook portion 72.

An inner curved portion of each hook portion 72 can be brought into elastic engagement with a respective recess 81 of a side wall 51 of the disc cartridge 50 so that the disc cartridge 50 is retained by the hook portions 72 and the cartridge 50 is pulled into the member 40 and prevented from being disengaged from the member 40 even if vibrations or shocks are applied to the case 1 when the case 1 is opened. The recesses 81 can also serve to pull the cartridge 50 into a disc player (not shown).

The operation of the disc cartridge storage case 1 is as follows:-

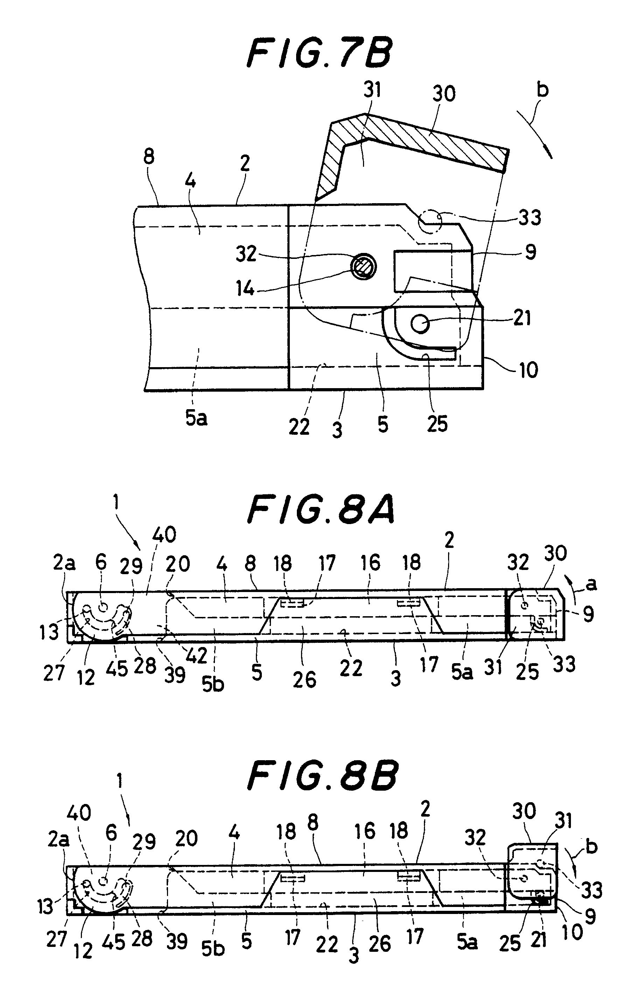

In order to open the case 1 from the closed position shown in Figures 7A and 8A, the handle 30 is rotated in the direction of arrow a to the position shown in Figures 7B and 8B. The engagement between the recesses 33 of the handle 30 and the projections 21 of the lower case member 3 is thereby released to unlock the upper case member 2 from the lower case member 3. Then, the handle 30 is lifted and the upper case member 2 is rotated as indicated by the dashed line in Figure 1.

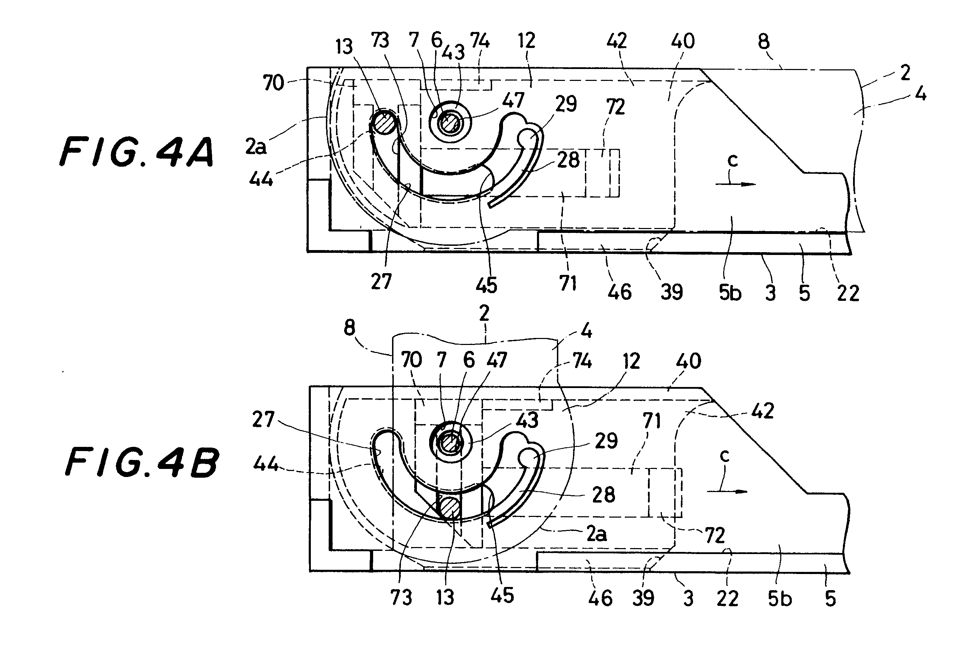

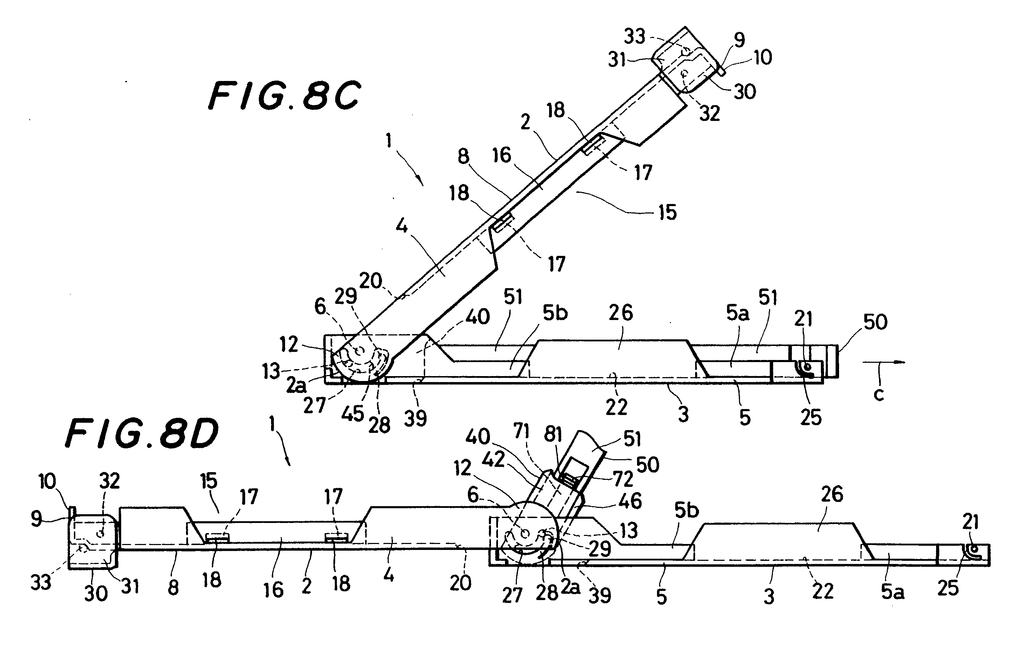

As the upper case member 2 rotates, the projections 13 of the case member 2 are slightly moved within the guide slots 27 of the lower case member 3 and the slots 44 of the cartridge holding member 40 and also slidably moved within the grooves 73 of the slider 70 disposed within the member 40 to slide the slider 70 in the direction of arrow c, that is, from the Figure 4A position to the Figure 4B position. Thereby, the disc cartridge 50 slides on the lower case member 3 and is ejected outwardly of the case 1 as shown in Figure 8C. Thereafter, when the upper case member 2 has been rotated through 120°, the projections 13 abut the ends 45 of the grooves 44 to cause the member 40 to be rotated.

When the projections 13 reach the ends of the guide slots 27 while pressing the protrusions 29 of the resilient projections 28 as shown in Figure 4C, the rotation of the upper case member 2 and the member 40 stops, and the projections 13 are locked at that position by the protrusions 29. The upper case member 2 and the member 40 are thus locked at a predetermined position, and therefore, the case member 2 and the member 40 are not returned by the weight of the cartridge 50 to their original positions. Accordingly, the cartridge 50 is held in a state where it is levitated between the upper case member 2 and the lower case member 3. This state is shown in Figure 4C and 8D. By grasping the upper and lower surfaces of the cartridge 50, it can be easily pulled out of the member 40 for use.

In order to close the case 1, the handle 30 is held, and the upper case member 2 is rotated towards the lower case member 3. Upon such rotation of the upper case member 2, the projections 13 are moved from the position indicated by the solid line in Figure 4C within the guide slots 27 and the slots 44 while pressing the protrusions 29 of the resilient projections 28 as indicated by the dashed line and moving the member 40 and the slider 70 as shown in Figure 4A.

When the lower case member 2 is closed, the trapezoidal side walls 26 of the lower case member 3 are fitted into the notches 15 of the upper case member 2 to cover the holes 18 of the card engaging members 16 from outside.

After the upper case member 2 has been closed, the handle 30 is rotated in the direction of arrow b in Figures 7B and 8B to bring the recesses 33 and the projections 21 into engagement with each other to lock the case member 2 to the case member 3. This state is shown in Figures 1, 7A and 8A.

In the above-described embodiment, the cartridge holding member 40 is not formed integral with the case member 2 and the case member 3 but is separately assembled. If the member 40 is provided integral with the case member 2 and the case member 3, the bottom surface 22 of the lower case member 3 needs to be inclined so that it can be removed from the metallic mould in which it is formed. If the case 1 becomes large, a difference of a wall thickness of the bottom surface 22 increases between the one end and the other of the case 1.

However, in this embodiment, the case 1 and the member 40 are separately formed, and therefore the bottom surface 22 need not be inclined in order to enable it to be removed from the metallic mould.

While in the above embodiment, the second engaging portion provided in the handle 30 and the second portion to be engaged provided on the lower case member 3 are constituted by the recesses 33 and the projections 21, respectively, it will be noted that the recess as the second engaging portion and the projection 21 as the second portion to be engaged can be constituted reversely, or the second engaging portion can be constituted by a pawl, and the second portion to be engaged can be constituted by a recess into which the pawl is fitted. That is, any suitable form of the second engaging portion and second portion to be engaged may be employed as long as the upper case member 2 and the lower case member 3 can be locked by rotation of the handle 30.

Furthermore, the shape of the handle 30 is not limited to that shown in the embodiment and the invention can be widely applied not only to a disc cartridge storage case 1 but also to storage cases for other recording media such as optical discs, optical magnetic discs and magnetic tape cassettes.

## Claims

1. A recording medium storage case (1) comprising:

a first case member (2) and a second case member (3) pivoted together and relatively rotatable about a pivot (6, 7) located in the vicinity of one end of the case; and

a recording medium holding member (40) rotatably supported at the pivot (6, 7), housed between the first case member (2) and the second case member (3) when the case (1) is closed and so arranged that rotation of the first case member (2) to open the case (1) causes the recording medium holding member (40) also to be rotated through a predetermined angle relative to the second case member (3);

characterised in that a first engaging portion formed as a lateral projection (13) and spaced from the pivot (6, 7) is provided on the first case member (2);

a first engaged portion (45) is provided on the recording medium holding member (40) and is formed as a wall (45) at the end of an arcuate slot (44) in the recording medium holding member (40);

the first engaging portion (13) engages with the first engaged portion (45) upon rotation of the first case member (2) through a predetermined angle relative to the second case member (3) from a closed position of the case (1);

after engagement of the first engaging portion (13) with the first engaged portion (45), continued rotation of the first case member (2) causes the recording medium holding member (40) also to be rotated;

a slider (70) supported within the recording medium holding member (40) is slidably movable relative to the holding member (40) and cooperates with the projection (13) such that, upon the first case member (2) being rotated away from the second case member (3) to rotate the projection (13) about the pivot (6, 7), the slider (70) is moved by the projection (13) toward the other end of the second case member (3), and a recording medium (50) held on the holding member (40) is ejected toward said other end of the second case member (3) by the movement of the slider (70); and

an opening and closing handle (30) is rotably supported at opposite sides of the other end of the first case member (2) and has a first engaging portion (33) to be engaged with a second engaged portion (21) provided at the other end of the second case member (3) selectively to lock the first and second case members together in a closed position of the case (1).

2. A recording medium storage case according to claim 1, wherein the slider (70) is provided with a pair of hook portions (72), by which a recording medium can be held thereon.

3. A recording medium storage case according to claim 1 or claim 2, including a lock means (28, 29) to lock the first engaging portion at a position wherein the first case member (2) has been rotated beyond said predetermined angle.

**Revendications**

1. Boîte de rangement pour support d'enregistrement (1) comprenant :
   un premier élément de boîte (2) et un second élément de boîte (3) montés ensemble de façon pivotante et pouvant tourner l'un par rapport à l'autre autour d'un pivot (6, 7) situé au voisinage d'une extrémité de la boîte ; et
   un élément de maintien du support d'enregistrement (40) supporté de façon à pouvoir tourner au niveau du pivot (6, 7), logé entre le premier élément de boîte (2) et le second élément de boîte (3) quand la boîte (1) est fermée et disposée de façon que la rotation du premier élément de boîte (2) pour ouvrir la boîte (1) provoque aussi pour l'élément de maintien du support d'enregistrement (40) une rotation selon un angle prédéterminé par rapport au second élément de boîte (3) ;
   caractérisée en ce que :
   une première partie d'engagement formée selon une projection latérale (13) et espacée du pivot (6, 7) est ménagée sur le premier élément de boîte (2),
   une première partie engagée (45) est disposée sur l'élément de maintien du support d'enregistrement (40) et est formée selon une paroi (45) au niveau de l'extrémité d'une fente incurvée (44) dans l'élément de maintien du support d'enregistrement (40) ;
   la première partie d'engagement (13) s'engage dans la première partie engagée (45) lors de la rotation du premier élément de boîte (2) selon un angle prédéterminé par rapport au second élément de boîte (3) depuis une position fermée de la boîte (1) ;
après l'engagement de la première partie d'engagement (13) avec la première partie engagée (45), la poursuite de la rotation du premier élément de boîte (2) provoque également la rotation de l'élément de maintien du support d'enregistrement (40) ;
un coulisseau (70) supporté à l'intérieur de l'élément de maintien du support d'enregistrement (40) est déplaçable de façon coulissante par rapport à l'élément de maintien (40) et coopère avec la projection (13) de sorte que, quand le premier élément de boîte (2) est tourné vers l'extérieur depuis le second élément de boîte (3) afin de faire tourner la projection (13) autour du pivot (6, 7), le coulisseau (70) est déplacé par la projection (13) en direction de l'autre extrémité du second élément de boîte (3), et un support d'enregistrement (50) maintenu sur l'élément de maintien (40) est éjecté vers l'extérieur de l'autre extrémité du second élément de boîte (3) par le mouvement du coulisseau (70) ; et en ce que
une poignée d'ouverture et de fermeture (30) est supportée de façon à pouvoir tourner au niveau des côtés opposés de l'autre extrémité du premier élément de boîte (2) et comprend une première partie d'engagement (33) destinée à être engagée avec une seconde partie engagée (21) ménagée au niveau de l'autre extrémité du second élément de boîte (3) pour effectuer de façon sélective le verrouillage des premier et second éléments de boîte ensemble dans une position de fermeture de la boîte (1).

2. Boîte de rangement pour support d'enregistrement selon la revendication 1, dans laquelle le coulisseau (70) est muni d'une paire de parties de crochetage (72) à l'aide desquelles un support d'enregistrement peut être maintenu en place.

3. Boîte de rangement pour support d'enregistrement selon la revendication 1 ou la revendication 2, comprenant un moyen de verrouillage (28, 29) pour verrouiller la première partie d'engagement selon une position dans laquelle le premier élément de boîte (2) a été tourné au-delà de l'angle prédéterminé.

**Ansprüche**

1. Lagerungsbehälter (1) für Datenträger mit:
einem ersten Behälterteil (2) und einem zweiten Behälterteil (3), die gemeinsam angelenkt und in einem in der Nähe eines Endes des Behälters angeordneten Drehgelenk (6,7) relativ verschwenkbar sind, und
einem schwenkbar im Drehgelenk (6,7) abgestützten Datenträger-Aufnahmeteil (40), bei geschlossenem Behälter (1) zwischen dem ersten Behälterteil (2) und dem zweiten Behälterteil (3) untergebracht und so angeordnet ist, daß es bei Verschwenkung des ersten Behälterteils (2) zum Öffnen des Behälters (1) ebenfalls relativ zum zweiten Behälterteil (3) um einen vorbestimmten Winkel verschwenkt wird, dadurch **gekennzeichnet,**
daß ein als seitlicher Vorsprung (13) ausgebildetes und mit Abstand vom Drehgelenk (6,7) angeordnetes erstes Eingriffselement am ersten Behälterteil (2) vorgesehen ist,
daß ein erstes Eingriffsgegenelement (45) am Datenträger-Aufnahmeteil (40) vorgesehen und als Wandung (45) am Ende eines bogenförmigen Schlitzes (44) im Datenträger-Aufnahmeteil (40) ausgebildet ist,
daß das erste Eingriffselement (13) bei Verschwenkung des ersten Behälterteils (2) von einer geschlossenen Stellung des Behälters (1) aus um einen vorbestimmten Winkel relativ zum zweiten Behälterteil (3) in Eingriff mit dem ersten Eingriffsgegenelement (45) gelangt, daß nach dem Eingriff des ersten Eingriffselements (13) mit dem ersten Eingriffsgegenelement (45) eine weitere Verschwenkung des ersten Behälterteils (2) auch eine Verschwenkung des Datenträger-Aufnahmeteils (40) bewirkt,
daß ein innerhalb des Datenträger-Aufnahmeteils (40) abgestütztes Gleitstück (70) relativ zum Aufnahmeteil (40) verschiebbar ist und derart mit dem Vorsprung (13) zusammenwirkt, daß bei Verschwenkung des ersten Behälterteils (2) weg vom zweiten Behälterteil (3) zwecks Verschwenkung des Vorsprungs (13) um das Drehgelenk (6,7) das Gleitstück (70) durch den Vorsprung (13) in Richtung des anderen Endes des zweiten Behälterteils (3) bewegt wird und ein im Aufnahmeteil (40) gehaltener Datenträger (50) in Richtung dieses anderen Endes des zweiten Behälterteils (3) durch die Bewegung des Gleitstücks (70) ausgestoßen wird,
und daß ein Handgriff (30) zum Öffnen und Schließen an gegenüberliegenden Seiten des anderen Endes des ersten Behälterteils (2) schwenkbar abgestützt ist und ein erstes Eingriffselement (33) aufweist, das für den Eingriff mit einem am anderen Ende des zweiten Behälterteils (3) angebrachten zweiten Eingriffsgegenelement (21) vorgesehen ist, um wahlweise das erste und zweite Behälterteil bei geschlossenem Behälter (1) miteinander zu verriegeln.

2. Lagerungsbehälter für Datenträger nach Anspruch 1, in welchem das Gleitstück (70) mit einem Paar Hakenabschnitten (72) versehen ist, mittels welcher ein Datenträger am Gleitstück gehalten werden kann.

3. Lagerungsbehälter für Datenträger nach Anspruch 1 oder Anspruch 2, mit einer Feststelleinrichtung (28,29) zum Feststellen des ersten Eingriffselements an einer Stelle, bis zu der das erste Behälterteil (2) über den vorbestimmten Winkel hinaus verschwenkt worden ist.

FIG.1

FIG.2

FIG.3

**FIG. 4A**

**FIG. 4B**

# FIG.4C

# FIG.5

EP 0 221 749 B1

## FIG.6A

## FIG.6B

## FIG.7A

## FIG.7B

## FIG.8A

## FIG.8B

FIG.8C

FIG.8D